# DEMANDE DE BREVET EUROPEEN

(11) **EP 4 024 804 A1**
(43) Date de publication de la demande: **06.07.2022**
(21) Numéro de dépôt: 21218343.8
(22) Date de dépôt: 30.12.2021
(51) Int. Cl.: H04L 27/26

(54) **PROCÉDÉ ET MODULE D ÉMISSION DE TRAMES RADIO, PROCÉDÉ ET MODULE DE RÉCEPTION DE TRAMES RADIO, TRAME RADIO ASSOCIÉE**

(30) Priorité: 30.12.2020 FR 2014251
(71) Demandeur: THALES, 92400 Courbevoie (FR)
(72) Inventeur: PANAITOPOL, Dorin, 92622 GENNEVILLIERS CEDEX (FR); PERON, Jean-Luc, 92622 GENNEVILLIERS CEDEX (FR)
(74) Mandataire: Lavoix

(57) **Abrégé**

Ce procédé, réalisé par un module électronique d'émission radio (10), consiste à : pour un espacement Δf quelconque entre sous-porteuses fréquentielles préalablement sélectionné entre plusieurs espacements, un nombre déterminé d'échantillons N par symbole OFDM utile et une bande fréquentielle d'émission BW déterminée où lesdits espacement Δf, nombre d'échantillons N par symbole et bande fréquentielle d'émission BW sont tels que prescrits par la norme 3GPP 5G NR et définissant une configuration d'émission courante, générer des symboles OFDM utiles ; constituer une trame radio de durée 10 ms comprenant certains des symboles OFDM utiles générés et dans laquelle chaque symbole OFDM utile est précédé d'un préfixe cyclique, respectivement suivi d'un suffixe cyclique, répétant une partie dudit symbole utile. Il se caractérise en ce que le nombre total de symboles OFDM utiles dans la trame radio est strictement inférieur au nombre prescrit par la norme 3GPP 5G NR pour ladite configuration et en ce que la ressource ainsi libérée dans la trame radio est utilisée en augmentant la taille des préfixes, respectivement suffixes, cycliques desdits symboles par rapport à la taille des préfixes prescrites pour ladite configuration par ladite norme.

## Description

La présente invention concerne le domaine de l'émission et de la réception de signal radio composé de trames conforme au moins partiellement à la technologie, dite 5G NR (5G New Radio), d'accès radio (RAT) développée par 3GPP pour le réseau mobile 5G.

La présente invention concerne plus spécifiquement un procédé d'émission de trames radio, dans un module électronique d'émission radio adapté, comprenant les étapes suivantes : pour un espacement Δf quelconque entre sous-porteuses fréquentielles préalablement sélectionné entre plusieurs espacements, un nombre déterminé d'échantillons N par symbole OFDM utile et une bande fréquentielle d'émission BW déterminée où lesdits espacement Δf, nombre d'échantillons N par symbole et bande fréquentielle d'émission BW sont tels que prescrits par la norme 3GPP 5G NR et définissant une configuration d'émission courante, génération de symboles OFDM utiles ; et, constitution d'une trame radio de durée 10 ms comprenant certains des symboles OFDM utiles générés et dans laquelle chaque symbole OFDM utile est précédé d'un préfixe cyclique, respectivement suivi d'un suffixe cyclique, répétant une partie dudit symbole utile.

Dans les versions de la norme 3GPP 5G NR dite Rel-17, la Rel-16 et la Rel-15, le préfixe cyclique étendu (« Extended Cyclic Prefix » en Anglais) n'est pas autorisé notamment pour les configurations 5G NR de 15 et 30 kHz.

Or, si l'écart temporel entre un premier et un dernier multi-trajet de signal dépasse la taille du préfixe cyclique, le signal reçu peut présenter une forte interférence inter-symbole et/ou une baisse importante de signal ou du rapport signal à bruit (« Signal to Noise Ratio » en Anglais).

Ces perturbations sont particulièrement présentes dans le cas d'applications de broadcast/multicast et/ou de relayage coopératif (un type de relayage qui utilise plusieurs transmetteurs qui transmettent tous le même flux de données en même temps, plusieurs récepteurs, puis des retransmissions consécutives sur plusieurs bonds, car chaque récepteur qui devient relais peut retransmettre à son tour).

Il est donc nécessaire de trouver une solution qui permette d'augmenter la résistance aux multi-trajets et plus généralement aux imperfections de synchronisation de la trame radio.

A cet effet, suivant un premier aspect, l'invention propose un procédé d'émission de trames radio du type précité caractérisé en ce que le nombre total de symboles OFDM utiles dans la trame radio est strictement inférieur au nombre prescrit par la norme 3GPP 5G NR pour ladite configuration et en ce que la ressource ainsi libérée dans la trame radio est utilisée en augmentant la taille des préfixes, respectivement suffixes, cycliques desdits symboles par rapport à la taille des préfixes prescrites pour ladite configuration par ladite norme.

Une trame de signal ainsi générée permet d'augmenter la résistance du signal aux multi-trajets et plus généralement aux imperfections de synchronisation de la trame radio.

L'invention permet ainsi de rendre compatible la couche physique 5G NR avec des applications de type multicast/broadcast, diffusion, diversité coopérative en transmission (e.g. plusieurs transmetteurs transmettent le même flux de données potentiellement en même temps pour enrichir la diversité au niveau d'un récepteur qui reçoit la/les transmissions ; dans une première étape de transmission, les transmetteurs peuvent synchroniser leurs transmissions) et/ou en réception (e.g. plusieurs récepteurs reçoivent le même flux de données potentiellement en même temps, depuis un ou plusieurs transmetteurs, et puis ils s'échangent l'information reçue, potentiellement dans un deuxième temps, pour enrichir la diversité), relayage coopératif (un type de relayage qui utilise plusieurs transmetteurs qui transmettent tous le même flux de données en même temps, plusieurs récepteurs, puis des retransmissions consécutives sur plusieurs bonds, car chaque récepteur qui devient relais peut retransmettre à son tour, potentiellement le même flux de données, potentiellement en même temps qu'un autre ou plusieurs autres relais).

Dans des modes de réalisation, un procédé d'émission de trames radio suivant l'invention comporte en outre une ou plusieurs des caractéristiques suivantes :
- étant donné deux ou plusieurs éléments successifs émis parmi deux ou plusieurs slots, deux ou plusieurs sous-trames ou deux ou plusieurs trames : le nombre total de symboles OFDM utiles par élément - et la taille des préfixes CP - est modifié entre les deux ou plusieurs éléments ; ladite modification étant réalisée avec maintien de l'espacement Δf ; et/ou l'espacement Δf est modifié entre les deux ou plusieurs éléments.
- la trame est constituée conformément à un ou plusieurs des formats suivants :
- pour un espacement sélectionné de 30 kHz, la durée de préfixe, respectivement suffixe, cyclique est de 8,33 µs et la durée de symbole OFDM utile étant 33,33 µs ;
- pour un espacement sélectionné de 30 kHz, la durée de préfixe cyclique, respectivement suffixe, est de 16,67 µs et la durée de symbole OFDM utile étant 33,33 µs ;
- pour un espacement sélectionné de 30 kHz, respectivement suffixe, cyclique est de 29,17 µs et la durée de symbole OFDM utile étant 33,33 µs ;
- pour un espacement sélectionné de 15 kHz, la durée de préfixe, respectivement suffixe, cyclique est de 16,67 µs et la durée de symbole OFDM utile étant 66,67 µs ;
- pour un espacement sélectionné de 15 kHz, la durée de préfixe, respectivement suffixe, cyclique est de 33,33 µs et la durée de symbole OFDM utile étant 66,67 µs ;
- pour un espacement sélectionné de 15 kHz, la durée de préfixe, respectivement suffixe, cyclique est de 58,33 µs et la durée de symbole OFDM utile étant 66,67 µs ;
- pour un espacement sélectionné de 7,5 kHz, la durée de préfixe, respectivement suffixe, cyclique est de 10,417 µs et de 9,375 µs et la durée de symbole OFDM utile étant 133,333 µs ;
- pour un espacement sélectionné de 7,5 kHz, la durée de préfixe, respectivement suffixe, cyclique est de 33,33 µs et la durée de symbole OFDM utile étant 133,33 µs ;
- pour un espacement sélectionné de 7,5 kHz, la durée de préfixe, respectivement suffixe, cyclique est de 66,67 µs et la durée de symbole OFDM utile étant 133,33 µs ;
- pour un espacement sélectionné de 7,5 kHz, la durée de préfixe, respectivement suffixe, cyclique est de 116,67 µs et la durée de symbole OFDM utile étant 133,33 µs ;
- pour un espacement sélectionné de 60 kHz, la durée de préfixe, respectivement suffixe, cyclique est de 8,33 µs et la durée de symbole OFDM utile étant 16,67 µs ;
- pour un espacement sélectionné de 60 kHz, la durée de préfixe, respectivement suffixe, cyclique est de 14,583 µs et la durée de symbole OFDM utile étant 16,667 µs.

Suivant un deuxième aspect, la présente invention propose un procédé de réception de trames radio dans un module électronique de réception radio adapté, comprenant les étapes suivantes : réception de trames radio de 10 ms comprenant des symboles OFDM utiles précédemment générés conformément à la norme 5G NR et dans laquelle chaque symbole OFDM utile est précédé d'un préfixe, respectivement suffixe, cyclique répétant une partie dudit symbole OFDM utile ; pour chaque symbole OFDM utile, détermination d'un symbole OFDM utile corrigé en fonction dudit symbole OFDM utile et de son préfixe, respectivement suffixe ; pour un espacement quelconque entre sous-porteuses fréquentielles préalablement sélectionné entre plusieurs espacements, une fréquence déterminée d'échantillonnage et une bande fréquentielle d'émission déterminée tels que prescrits par la norme 3GPP 5G NR et définissant une configuration de réception courante, transformation de Fourier inverse desdits symboles OFDM corrigés conformément à la norme 3GPP 5G NR, ledit procédé de réception étant caractérisé en ce que le nombre total de symboles OFDM utiles dans la trame radio est strictement inférieur au nombre prescrit par la norme 3GPP 5G NR et en ce que la taille des préfixes, respectivement suffixes, cycliques desdits symboles est supérieure à celle prescrite par la norme 3GPP 5G NR pour ladite configuration.

Dans des modes de réalisation, un procédé de réception de trames radio suivant l'invention comporte en outre une ou plusieurs des caractéristiques suivantes :
- la trame est constituée conformément à un ou plusieurs des formats suivants :
   - pour un espacement sélectionné de 30 kHz, la durée de préfixe, respectivement suffixe, cyclique est de 8,33 µs et la durée de symbole OFDM utile étant 33,33 µs ;
   - pour un espacement sélectionné de 30 kHz, la durée de préfixe cyclique, respectivement suffixe, est de 16,67 µs et la durée de symbole OFDM utile étant 33,33 µs ;
   - pour un espacement sélectionné de 30 kHz, respectivement suffixe, cyclique est de 29,17 µs et la durée de symbole OFDM utile étant 33,33 µs ;
   - pour un espacement sélectionné de 15 kHz, la durée de préfixe, respectivement suffixe, cyclique est de 16,67 µs et la durée de symbole OFDM utile étant 66,67 µs ;
   - pour un espacement sélectionné de 15 kHz, la durée de préfixe, respectivement suffixe, cyclique est de 33,33 µs et la durée de symbole OFDM utile étant 66,67 µs ;
   - pour un espacement sélectionné de 15 kHz, la durée de préfixe, respectivement suffixe, cyclique est de 58,33 µs et la durée de symbole OFDM utile étant 66,67 µs ;
   - pour un espacement sélectionné de 7,5 kHz, la durée de préfixe, respectivement suffixe, cyclique est de 10,417 µs et de 9,375 µs et la durée de symbole OFDM utile étant 133,333 µs ;
   - pour un espacement sélectionné de 7,5 kHz, la durée de préfixe, respectivement suffixe, cyclique est de 33,33 µs et la durée de symbole OFDM utile étant 133,33 µs ;
   - pour un espacement sélectionné de 7,5 kHz, la durée de préfixe, respectivement suffixe, cyclique est de 66,67 µs et la durée de symbole OFDM utile étant 133,33 µs ;
   - pour un espacement sélectionné de 7,5 kHz, la durée de préfixe, respectivement suffixe, cyclique est de 116,67 µs et la durée de symbole OFDM utile étant 133,33 µs ;
   - pour un espacement sélectionné de 60 kHz, la durée de préfixe, respectivement suffixe, cyclique est de 8,33 µs et la durée de symbole OFDM utile étant 16,67 µs ;
   - pour un espacement sélectionné de 60 kHz, la durée de préfixe, respectivement suffixe, cyclique est de 14,583 µs et la durée de symbole OFDM utile étant 16,667 µs.

Suivant un troisième aspect, la présente invention propose un module d'émission de trames radio pour la mise en œuvre du procédé d'émission précédent.

De préférence, le module d'émission de trames radio est adapté pour mettre en œuvre la norme 3GPP 5G NR, le module d'émission fonctionnant avantageusement soit dans un premier mode opérationnel dans lequel il fonctionne selon un procédé d'émission conforme à la norme 3GPP 5G NR, soit dans un second mode opérationnel dans lequel il fonctionne selon le procédé d'émission précédent.

Suivant un quatrième aspect, la présente invention propose un module de réception de trames radio pour la mise en œuvre du procédé de réception précédent.

De préférence, le module de réception de trames radio est adapté pour mettre en œuvre la norme 3GPP 5G NR, le module de réception fonctionnant avantageusement soit dans un premier mode opérationnel dans lequel il fonctionne selon un procédé de réception conforme à la norme 3GPP 5G NR, soit dans un second mode opérationnel dans lequel il fonctionne selon le procédé de réception précédent.

Suivant un cinquième aspect, la présente invention propose une trame radio résultant de la mise en œuvre du procédé d'émission précédent.

Ces caractéristiques et avantages de l'invention apparaîtront à la lecture de la description qui va suivre, donnée uniquement à titre d'exemple, et faite en référence aux dessins annexés, sur lesquels :
- la figure 1 représente une vue schématique d'un réseau de télécommunication dans un mode de réalisation de l'invention ;
- la figure 2 est un organigramme d'étapes mises en œuvre dans un mode de réalisation de l'invention ;
- la figure 3 illustre des modifications de trames 5G NR pour un espacement de 15 kHz dans un mode de réalisation de l'invention ;
- la figure 4 illustre des modifications de trames 5G NR pour un espacement de 15 kHz dans un mode de réalisation de l'invention ;
- la figure 5 illustre des modifications de trames 5G NR pour un espacement de 30 kHz dans un mode de réalisation de l'invention ;
- la figure 6 illustre des modifications de trames 5G NR pour un espacement de 30 kHz dans un mode de réalisation de l'invention ;
- la figure 7 illustre des modifications de trames 5G NR pour un espacement de 7,5 kHz dans un mode de réalisation de l'invention ;
- la figure 8 illustre des trames pour un espacement de 7,5 kHz dans un mode de réalisation de l'invention ;
- la figure 9 illustre des trames pour un espacement de 7,5 kHz dans un mode de réalisation de l'invention ;
- la figure 10 illustre des modifications de trames pour un espacement de 7,5 kHz dans un mode de réalisation de l'invention ;
- la figure 11 illustre des trames pour un espacement de 7,5 kHz dans un mode de réalisation de l'invention.

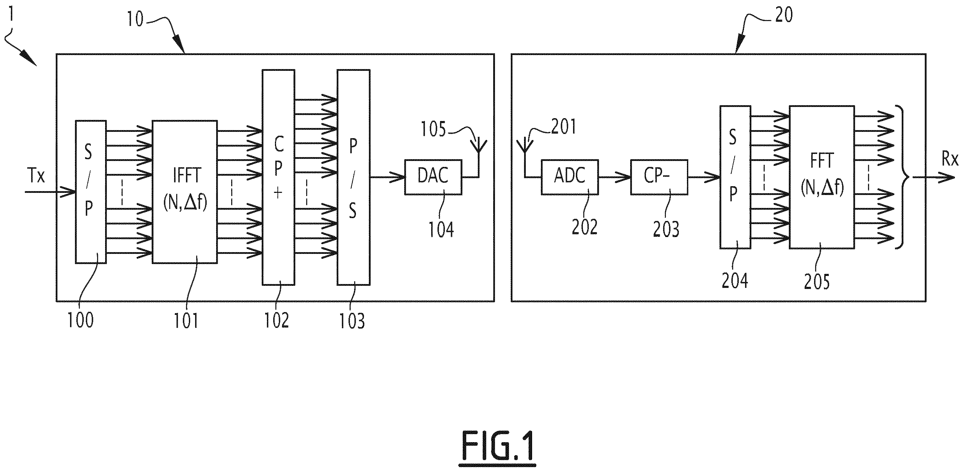

La figure 1 représente schématiquement un réseau de radiocommunication 1 dans un mode de réalisation de l'invention, comprenant des modules d'émission radio 10 et des modules de réception radio 20 (un unique exemplaire de chacun de ces modules est représenté en figure 1).

De tels modules font partie de nœuds de communication tels que des stations de base radio ou des terminaux utilisateurs de radiocommunication du réseau 1. Ces nœuds radios comportent en outre, de façon connue, un ensemble d'applications logicielles et de modules de traitement pour produire un flux Tx de données à émettre par voie radio par le module d'émission radio 10 (respectivement pour traiter un flux Rx de données reçues par voie radio par le module de réception radio 20).Le module d'émission radio 10 et le module de réception radio 20 sont adaptés dans un mode de réalisation pour mettre en œuvre, dans un premier mode opérationnel (mode 1), le protocole d'accès radio 5G NR tel que spécifié par 3GPP, par exemple conformément aux spécifications 5G 3GPP d'une station de base gNB Rel-15, e.g. TS 38.104 et les spécifications 5G 3GPP d'un équipement utilisateur UE Rel-15, e.g. TS 38.101-1 et/ou TS 38.101-2 et les spécifications 5G 3GPP pour la couche PHY Rel-15, i.e. TS 38.211, et dans un deuxième mode opérationnel (mode 2), pour mettre en œuvre ce protocole tel que modifié selon l'invention.

La figure 1 est une illustration simplifiée d'un exemple typique d'un transmetteur (Tx) et d'un récepteur (Rx) 5G NR, représentant ainsi une chaîne de communication radio dans le sens descendant (« DownLink, DL, i.e. une communication depuis une station de base vers le mobile/User Equipment) et/ou dans le sens montant (« UpLink », UL, i.e. communication depuis le mobile/User Equipment vers la station de base) (si modulation OFDM simple, sans précodage), ou encore de type SideLink (communication depuis un mobile/User Equipment vers un autre mobile/User Equipment, par exemple communication « Device-to-Device », D2D, ou communication « Vehicle-to-Everything », V2X ou « Vehicle-to-Vehicle », V2V, ou pour des services spécifiques comme Proximity Services ou ProSe).

On notera que dans le sens UL, d'autres modulations peuvent être utilisées que celle décrite ici, notamment le DFT-s-OFDM (avec précodage). L'invention peut bien sûr être mise en œuvre dans de telles autres modulations.

Plus spécifiquement, la figure 1 représente la transmission et la réception d'un symbole OFDM. Les symboles se succèdent, et pour chaque symbole, le traitement représenté par la figure 1 est mis en œuvre. L'invention est mise en œuvre par exemple dans la plage de fréquence FR1 (des fréquences porteuses inferieures à 6 GHz ou 7.125 GHz) pour la mise en œuvre du protocole d'accès radio 5G NR, ou dans un autre exemple dans la plage de fréquence FR2 (des fréquences porteuses supérieure à 6 GHz ou 7.125 GHz ; la configuration de 60 kHz introduite plus loin peut fonctionner aussi sur FR2).

Dans d'autres modes de réalisation, seul le mode 2 (et pas le mode 1) est mis en œuvre par le module d'émission 10 ou par le module de réception 20.

Le module d'émission 10, en référence à la figure 1, comporte un convertisseur série/parallèle 100, un bloc de transformation de Fourier inverse 101, un bloc d'ajout de préfixe cyclique 102, un convertisseur parallèle/série 103, un convertisseur numérique/analogique 104 et une antenne radioélectrique 105.

Le fonctionnement dans les deux modes opérationnels est le même dans la constitution de la durée utile des symboles OFDM (en anglais,« useful symbol duration »), et diffère ensuite dans la longueur (considérée en temps et nombre d'échantillons par préfixe) des préfixes cycliques générés, qui est augmentée dans le mode 2, par rapport à la norme 5G NR (c'est-à-dire par rapport au mode 1) et dans le nombre de symboles utiles OFDM insérés dans une trame de 10 ms : le comportement des blocs 102, 103 diffère donc suivant les modes opérationnels, les autres blocs du module d'émission radio 10 ayant le même comportement dans les premier et deuxième modes opérationnel dans le mode de réalisation ici considéré, comportement conforme aux spécifications 3GPP 5G NR.

De façon connue, plusieurs valeurs d'espacements Δf entre sous-porteuses (en anglais « SubCarrier Spacing », encore libellé SCS) sont sélectionnables selon 5G NR, correspondant à des durées de symboles utiles et des durées de préfixes respectifs fixées par la norme 3GPP et correspondant donc au mode opérationnel 1 :

**Tableau 1 : durées - mode opérationnel 1**

| Numérologie (µ) | 0 | 1 | 2 | 3 | 4 |
|---|---|---|---|---|---|
| Δf (kHz) | 15 | 30 | 60 | 120 | 240 |
| Durée utile symbole OFDM (µs) | 66.67 | 33.33 | 16.67 | 8.33 | 4.17 |
| Durée préfixe cyclique (CP) (µs) | 4.69 | 2.34 | 1.17 | 0.57 | 0.29 |
| Symbole OFDM incluant CP (µs) | 71.35 | 35.68 | 17.84 | 8.92 | 4.46 |

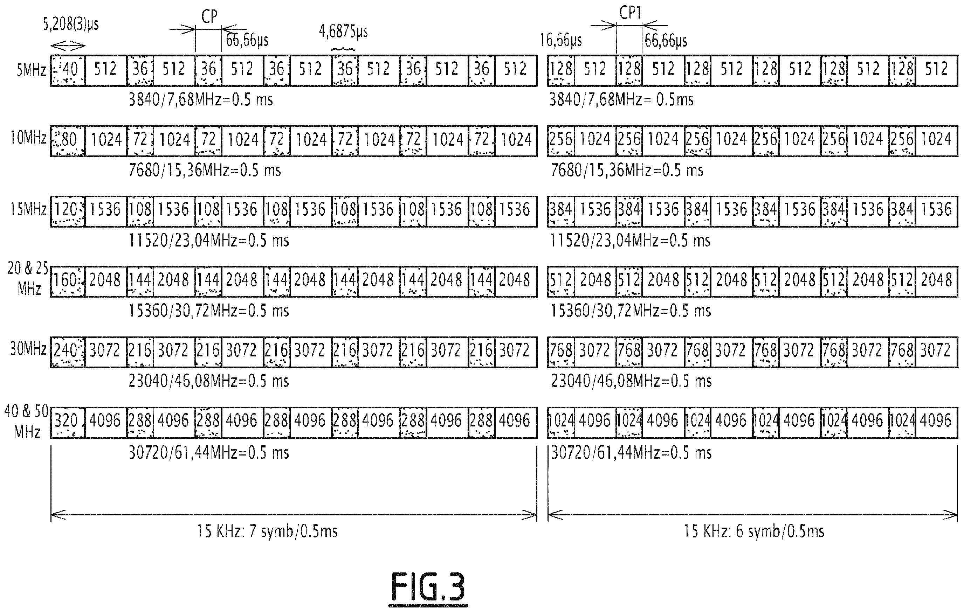

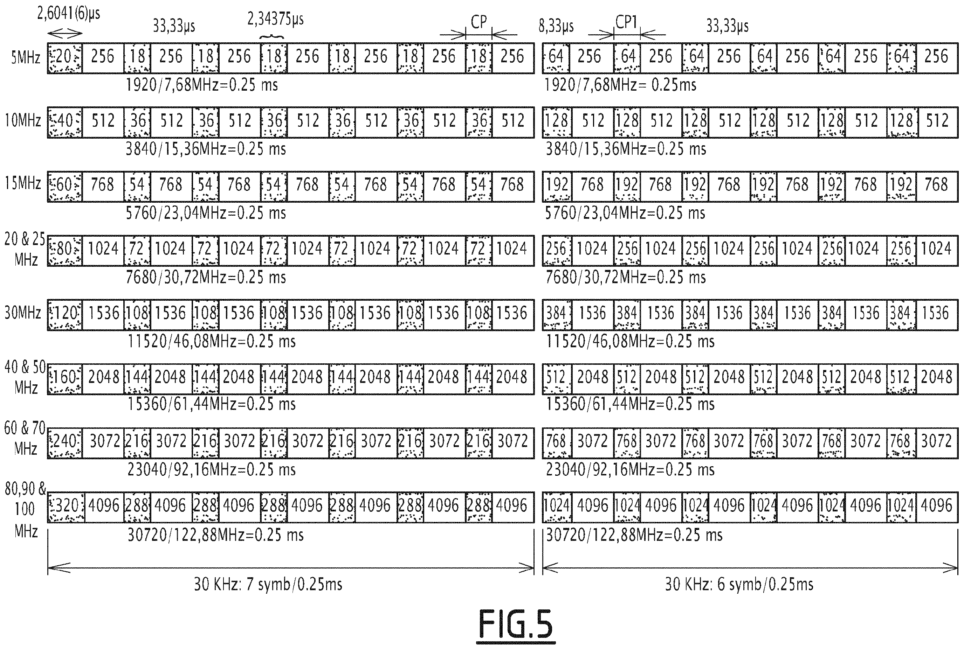

La durée du CP indiquée dans ce tableau 1 n'est pas valable, pour le premier symbole du demi-slot qui a un CP un peu plus grand et est valable pour les symboles qui lui succèdent dans le demi-slot - voir par exemple les configurations à gauche des Fig. 3 et 5.

Dans le mode opérationnel 2, différentes valeurs d'espacements Δf entre sous-porteuses (en anglais « Subcarrier Spacing ») sont également sélectionnables correspondant à des durées utiles de symboles similaires à celles indiquées dans le tableau 1, dans le mode de réalisation considéré, et à des durées de préfixes respectifs explicitées plus bas.

Le convertisseur série/parallèle 100 est adapté pour recevoir un flux Tx de symboles numériques en série, par exemple issus de modulation numérique de type BPSK, pi/2 BPSK, QPSK, QAM (e.g. 16QAM, 64QAM, 256QAM, etc.) ... en provenance des couches supérieures du modèle OSI (High-PHY, MAC, RLC, etc..) et pour délivrer, en parallèle en entrée du bloc de transformation de Fourier inverse 101.

Le bloc de transformation de Fourier inverse 101 (bloc IFFT ou IDFT 101 : IFFT si transformée Fourier inverse rapide, IDFT si transformée Fourier inverse discrète) est adapté pour effectuer une transformation de Fourier inverse sur le vecteur de symboles qui lui est ainsi fourni en entrée.

La taille N de la transformation de Fourrier inverse appliquée est fixée par la norme 3GPP 5G NR et est fonction de l'espacement entre sous-porteuses sélectionné et de la bande de fréquence sélectionnée parmi 5, 10, 15, 20, 25, 30, 40, 50, 60, 70, 80, 90, 100 MHz, par exemple N = 512 pour la bande 5 MHz et l'espacement 15 kHz, N = 1024 pour la bande 10 MHz et l'espacement 15 kHz, N = 256 pour la bande 5 MHz et l'espacement 30 kHz etc. comme le rappelle le tableau 2 plus bas.

Dans le mode de réalisation considéré, dans les deux modes opérationnels, pour un espacement Δf, la durée utile du symbole OFDM est Tu=1/Δf.

Pour la configuration Δf =15 kHz et la durée utile du symbole OFDM est Tu=1/Δf=66,6(6) µs (ou 66,67 µs par approximation), si on utilise une taille IFFT/FFT N=4096, cela veut dire que suite au changement d'espacement, où e.g. Δf devient égale à 30 kHz, la durée utile du symbole OFDM devient Tu=1/Δf=33,3(3) µs (ou 33,33 µs par approximation) et une taille IFFT/FFT égale à N/2=2048 est utilisée.

Pour les deux configurations 15 et 30 kHz, pour une configuration de bande figée, la fréquence d'échantillonnage reste la même. Par contre, pour deux bandes de fréquences différentes, la fréquence d'échantillonnage peut changer.

Le bloc IFFT 101 est adapté pour fournir en sortie la partie utile du symbole OFDM (ou symbole OFDM utile), qui est alors délivré au bloc d'ajout de préfixe cyclique 102 (bloc CP+ 102) pour former le symbole OFDM complet. Le symbole OFDM se compose donc d'un préfixe cyclique de durée CP (ou T_{CP}) et d'une partie utile (symbole OFDM utile) de durée Tu.

Le bloc CP+ 102 est adapté pour déterminer pour chaque symbole utile son préfixe cyclique en recopiant au début du symbole une partie du symbole utile (la fin du symbole utile) ; la taille de la portion de fin ainsi recopiée dépend du mode opérationnel 1 ou 2 sélectionné (et dans un mode de réalisation du sous-mode sélectionné dans le mode 2 quand plusieurs sous-modes y sont définis chacun correspondant à un niveau respectif de résistance souhaité aux multi-trajets), de l'espacement Δf sélectionné et de la bande de fréquence. Des exemples seront donnés plus bas.

Le bloc CP+ 102 est adapté dans le mode opérationnel 1 pour appliquer strictement les spécifications 3GPP 5G NR, et dans le mode opérationnel 2 pour maximiser/élargir la durée du préfixe cyclique OFDM pour la 5G NR, pour les différentes numérologies (15, 30 kHz ...) et configurations (5, 10, 15, 20, 25, 30, 40, 50, 60, 70, 80, 90, 100 MHz) de bande de fréquence FR1 (<7.125 GHz) (ou FR2>7.125 GHz pour une numérologie supérieure ou égale à 60 kHz), et les différentes fréquences d'échantillonnage, mais sans modification de la durée du symbole OFDM utile ou de sa taille et sans varier la fréquence d'échantillonnage par rapport aux spécifications de la norme.

Cela permet d'utiliser les mêmes tailles IFFT/FFT que les configurations 3GPP 5G NR et limite ainsi la complexité en termes d'architecture et d'implémentation du transmetteur/récepteur.

Le convertisseur parallèle/série 103 est adapté pour disposer en série (ou en domaine temporel) les échantillons qui constituent un symbole OFDM (à la sortie 103, on a un seul symbole OFDM à la fois), et chaque symbole OFDM est composé du préfixe cyclique du symbole OFDM déterminé par le bloc CP+ suivi de la partie utile dudit symbole OFDM. Le module d'émission 10 est adapté pour constituer une trame de 10 ms comportant à une suite de symboles OFDM. Le nombre des symboles OFDM inséré par trame par le module d'émission 10 dépend du mode opérationnel 1 ou 2 sélectionné (et dans un mode de réalisation du sous-mode sélectionné dans le mode 2), de l'espacement Δf, de la bande de fréquence et est fixé par 3GPP 5G NR. Pour le mode opérationnel 2, il est strictement inférieur à celui spécifié par la norme pour la même configuration d'espacement Δf et de bande de fréquence.

On peut utiliser le module d'émission 10 dans des modes de fonctionnement différents, e.g. en mode série (le module d'émission 10 génère les symboles un par un, et donc le traitement s'effectue symbole par symbole) ou en mode parallèle (plusieurs symboles sont générés par plusieurs modules d'émission 10, en même temps si besoin, et puis ajoutés (additionnés) sur la trame radio, après l'ajout du CP correspondant). Cela peut arriver par exemple si on souhaite faire un mélange de numérologies, et/ou un mélange des symboles avec des CP différents, et/ou si le temps nécessaire pour moduler le symbole OFDM (et/ou le codage nécessaire) est plus long que la durée du symbole.

Le convertisseur numérique/analogique 104 est adapté pour convertir les trames numériques ainsi obtenus avec une fréquence d'échantillonnage Fq_{_}Ech spécifique (e.g. définie par le Tableau 2) en signal analogique, et pour fournir le signal ainsi généré à l'antenne radioélectrique 105 pour émission radiofréquence.

Le module de réception radio 20 comporte une antenne radioélectrique 201, convertisseur analogique/numérique 202, un bloc de retrait de préfixe cyclique 203, un convertisseur série/parallèle 204, un bloc de transformation de Fourier 205.

Le fonctionnement dans les deux modes opérationnels des blocs 204 et 205 est par exemple le même et est conforme aux spécifications 3GPP 5G NR, si ce n'est que dans des modes de réalisation du mode opérationnel 2, des changements de bande - et/ou de numérologie et/ou de nombre de symboles et/ou de taille de CP - d'un élément tel qu'un slot, une sous-trame ou une trame à l'élément suivant dans le temps, sont mis en œuvre.

L'antenne 201 est adaptée pour recevoir le signal émis depuis un module d'émission 10 et pour fournir le signal analogique électrique résultant au convertisseur analogique/numérique 202. Ce dernier est adapté pour numériser le signal reçu et générer des échantillons. Chaque symbole OFDM est donc converti en échantillons, en nombre qui est fonction de Δf et de la bande de fréquence et pour les fournir au bloc de retrait de préfixe cyclique 203 (pas de changement de taille N pour le symbole utile, ou de fréquence d'échantillonnage, entre les modes 1 et 2 : Tu et N restent les mêmes entre le mode 1 et le mode 2 pour une même numérologie et une même bande de fréquence (seul le CP change)).

Le bloc de retrait de préfixe cyclique 203, bloc CP- 203 est adapté pour retirer du symbole OFDM le préfixe cyclique ; la taille/la durée du préfixe à retirer est fonction du mode opérationnel 1 ou 2 (et dans un mode de réalisation du sous-mode sélectionné dans le mode 2) et donc est adapté pour extraire un par un les symboles OFDM utiles de chaque trame de 10 ms reçue.

Il est donc nécessaire dans le récepteur, de façon synchronisée, de connaître la taille d'un CP, son positionnement du CP et la structure de la trame (surtout si la structure change d'une trame, d'une sous-trame, ou d'un slot ou demi-slot à un(e) autre).

Plusieurs méthodes sont utilisables pour ce faire :
- les configurations (et leur périodicités) sont connues d'avance (e.g. en utilisant par exemple une pré-configuration semi-statique, périodique ou semi-périodique ; une fois que le récepteur récupère partiellement la synchronisation ou identifie une partie de la périodicité qui et utilisée, le récepteur peut déterminer la structure de la trame ou la structure de plusieurs trames);
- le module d'émission indique dans un canal de contrôle (canal de broadcast comme par exemple PBCH (L1, canal broadcast physique) ou BCCH (L2, canal broadcast logique) ou BCH (« Broadcast Channel », canal transport), canal de paging PCCH (« Paging Control Channel », canal logique) ou PCH (« Paging Channel », canal de transport), DL-SCH (DownLink Shared Channel) ou UL-SCH (UpLink Shared Channel), DCI ou UCI (« DownLink/UpLink Control Information »), et/ou bloc de synchronisation SSB - « Synchronisation Signal and PBCH Block » (ou SS/PBCH), et/ou des canaux équivalents SideLink, et/ou information système type MIB - « Master Information Block », « System Information Block 1 » ou SIB1, SIB2, « Control Resource Set » CORESET, CORESET#0, ou autre comme signalisation L2 MAC CE (« Control Element »), ou L3 RRC (« Radio Resource Control »), etc.) la structure de la trame et/ou la numérologie ;
- le module de réception estime lui-même la durée du CP (et détermine la numérologie) ; suffit d'une (ou plusieurs) corrélations avec e.g. le symbole/les symboles reçus sur le slot/les slots/la trame/les trames reçus pour déterminer la taille du CP et la durée d'un symbole, et/ou éventuellement à l'aide d'une synchronisation sur des canaux type PSS/SSS ou S-PSS/S-SSS (« Primary Synchronization Signal »/ « Secondary Synchronization Signal » ou « Sidelink Primary Synchronization Signal »/ « Sidelink Secondary Synchronization Signal ») et/ou la bande de fréquence/la longueur/la durée et/ou la périodicité et/ou la structure en temps et fréquence de certains pilotes (e.g. comme PSS, SSS, DM-RS ou « Démodulation Reference Signal », CSI-RS ou « Chanel State Information Reference Signal », SRS ou « Sounding Reference Signal », PT-RS ou «Phase Tracking Reference Signal » etc., ou d'autres types de canaux équivalents SideLink) car certaines séquences ont de configurations spécifiques qui sont connues d'avance.

La partie utile du symbole OFDM est ensuite fournie au convertisseur série/parallèle 204 qui créé un vecteur composé de taille N des échantillons provenant de la partie utile du symbole OFDM de durée Tu.

Chaque échantillon (parmi les N reçus) correspond à une entrée dans le bloc FFT 205. La FFT est calculée sur un symbole OFDM utile (sans préfixe cyclique). La taille du vecteur composé est (équivalente à la taille d')un symbole utile exprimé(e) en échantillons.

Le bloc de transformation de Fourier 205 (bloc FFT ou DFT 205 : FFT si transformé Fourier directe rapide, ou DFT si transformé Fourier discrète) est adapté pour appliquer une transformation de Fourier au vecteur d'échantillons (correspondant à la durée utile d'un symbole OFDM) qui lui est fourni en entrée, de même taille N que celle ayant produit le symbole utile OFDM fourni.

En sortie du bloc FFT 205 est ainsi délivré un flux de symboles Rx. Ce flux de symboles après traitement par les couches OSI supérieures (High-PHY, MAC, RLC etc..), sera ensuite utilisé dans les applications du nœud de radiocommunication dont fait partie le module de réception 20.

Dans le tableau 2 ci-dessous sont indiquées les tailles N de FFT/IFFT (et donc le nombre des échantillons par partie utile du symbole OFDM), les fréquences d'échantillonnage Fq_{_}Ech (exprimées en [Méga échantillons par seconde] ou « Mega Samples per second » ou MSps) en fonction des espacements Δf et des bandes de fréquences, valables pour les modes opérationnels 1 et 2, dans le mode de réalisation considéré.

**Tableau 2 : taille FFT/IFFT, fréquence d'échantillonnage**

| | | | | | | | | | | | | | |
|---|---|---|---|---|---|---|---|---|---|---|---|---|---|
| | **5 MHz** | **10 MHz** | **15 MHz** | **20 MHz** | **25 MHz** | **30 MHz** | **40 MHz** | **50 MHz** | **60 MHz** | **70 MHz** | **80 MHz** | **90 MHz** | **100 MHz** |
| **15 kHz** | | | | | | | | | | | | | |
| N (FFT) | 512 | 1024 | 1536 | 2048 | 2048 | 3072 | 4096 | 4096 | N/A (>4096 FFT) | N/A (>4096 FFT) | N/A (>4096 FFT) | N/A (>4096 FFT) | N/A (>4096 FFT) |
| Fq_{_}Ech | 7,68 MSps | 15,36 MSps | 23,04 MSps | 30,72 MSps | 30,72 MSps | 46.08 MSps | 61,44 MSps | 61,44 MSps | | | | | |
| **30 kHz** | | | | | | | | | | | | | |
| N (FFT) | 256 | 512 | 768 | 1024 | 1024 | 1536 | 2048 | 2048 | 3072 | 3072 | 4096 | 4096 | 4096 |
| Fq_{_}Ech | 7,68 MSps | 15,36 MSps | 23,04 MSps | 30,72 MSps | 30,72 MSps | 46,08 MSps | 61,44 MSps | 61,44 MSps | 92.16 MSps | 92.16 MSps | 122,88 MSps | 122,88 MSps | 122,88 MSps |
| **60 kHz** | | | | | | | | | | | | | |
| N (FFT) | N/A | 256 | 384 | 512 | 512 | 768 | 1024 | 1024 | 1536 | 1536 | 2048 | 2048 | 2048 |
| Fq_{_}Ech | (<11 RBs) | 15,36 MSps | 23,04 MSps | 30,72 MSps | 30,72 MSps | 46,08 MSps | 61,44 MSps | 61,44 MSps | 92,16 MSps | 92,16 MSps | 122,88 MSps | 122,88 MSps | 122,88 MSps |

Le mode opérationnel 2 reste compatible avec la définition de la forme d'onde 5G NR normée : il s'agit d'une modification minimaliste pour pouvoir supporter les retards supplémentaires, les pertes de synchronisation et les multi-trajets dans un environnement de propagation complexe avec des écarts de propagation entre les multi-trajets supérieurs à e.g. 5 µs pour une configuration de 15 kHz ou e.g. 2,5 µs pour une configuration de 30 kHz. Le mode opérationnel 2 peut compenser aussi les erreurs de synchronisation entre plusieurs transmetteurs qui partagent le même flux de données, éventuellement codage et/ou MCS (en Anglais « Modulation and Coding Scheme ») pour des modes de diversité coopérative en utilisant des techniques de relayage coopératif par exemple.

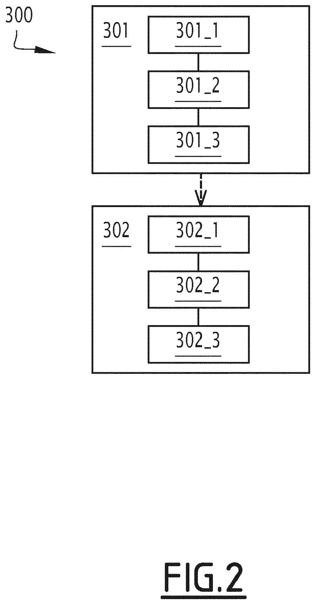

La figure 2 représente un ensemble 300 d'étapes mises en oeuvre selon l'invention dans un mode de réalisation comprenant un sous-ensemble d'étapes d'émission 301 et un sous-ensemble d'étapes de réception 302.

Dans un mode de réalisation, le module d'émission 10, respectivement le module de réception 20, comprend un processeur et une mémoire (non représentés). La mémoire comprend des instructions logicielles, qui lorsqu'elles sont exécutées sur le processeur, mettent en oeuvre automatiquement certaines au moins des étapes incombant au module d'émission 10, respectivement au module de réception 20 décrites en référence à la figure 2.

Dans le module d'émission 10 sont mises en oeuvre les étapes suivantes :
dans une étape 301_1 :
   - le convertisseur série/parallèle 100 reçoit un flux Tx de symboles numériques en série et en délivre les symboles en parallèle en entrée du bloc IFFT 101 ;
   - le vecteur de symboles correspond au nombre de sous-porteuses utilisables fixée par la norme 3GPP 5G NR en fonction de l'espacement entre sous-porteuses sélectionné et de la bande de fréquence sélectionnée, et qui est inférieur à la taille N fixée par la norme 3GPP 5G NR pour la taille IFFT. Le vecteur des symboles est par la suite enrichi avec de (valeurs de) zéros pour attendre la taille N (et qui est en général un nombre entier puissance de 2 pour réduire la complexité de calcul IFFT) nécessaire pour le bloc IFFT 101. La taille N est également fixée par la norme 3GPP 5G NR en fonction de l'espacement entre sous-porteuses sélectionné et de la bande de fréquence sélectionnée. L'ajout de zéros correspond à injecter de sous-porteuses nulles aux extrêmes de la bande de fréquence (méthode qui est nécessaire pour respecter les limites imposées par la norme, le gabarit spectral, ou pour diminuer l'interférence avec les bandes adjacentes) ou au milieu de la bande (autour de la composante DC ou directement sur la sous-porteuse DC, méthode qui est nécessaire parfois pour éviter une fuite directe du signal de l'oscillateur local, pour éviter les distorsions pour les récepteurs peu complexes, ou mal synchronisées, ou qui ne sont pas bien calées sur la fréquence porteuse du signal transmis) ou à des intervalles spécifiques potentiellement réguliers ou périodiques (e.g. pour diminuer le PAPR (Peak to Average Power Ratio) du signal OFDM).
   - le bloc IFFT 101 de taille N fixée par la norme 3GPP 5G NR en fonction de l'espacement entre sous-porteuses sélectionné et de la bande de fréquence sélectionnée, et indépendamment du mode opérationnel sélectionné 1 ou 2, effectue une transformation de Fourier inverse (e.g. discrète et/ou rapide) sur le vecteur de symboles qui lui est ainsi fourni en entrée, puis fournit en sortie un symbole OFDM utile de taille N, qui est alors délivré au bloc d'ajout de préfixe cyclique 102 (bloc CP+ 102).
dans une étape 301_2 :
   - le bloc CP+ détermine, en fonction du mode 1 ou 2 sélectionné, pour chaque symbole OFDM utile fourni, le préfixe cyclique correspondant, qui est une copie de la fin du symbole OFDM utile : la taille de la portion de fin ainsi recopiée dépend du mode opérationnel 1 ou 2 sélectionné et est augmentée dans le mode 2 par rapport au mode 1 ;
   - le convertisseur parallèle/série 103 dispose en série le symbole OFDM composé du préfixe cyclique suivi dudit symbole OFDM utile correspondant et constitue un symbole OFDM complet ;
   - le module d'émission 10 (ou l'utilisation du module d'émission 10 à plusieurs reprises) constitue par la suite une trame de 10 ms comportant une suite de plusieurs symboles OFDM ; le nombre des symboles OFDM inséré par trame par le module d'émission 10 dépend du mode 1 ou 2 sélectionné (et dans un mode de réalisation du sous-mode sélectionné dans le mode 2), de l'espacement Δf, de la bande de fréquence et est fixé par 3GPP 5G NR ; dans le mode 2, il est strictement inférieur à celui spécifié par la norme pour la même configuration d'espacement Δf et de bande de fréquence, puisque la taille des préfixes cycliques a augmenté, tandis que la taille, la durée, le nombre d'échantillons et/ou la fréquence d'échantillonnage du symbole OFDM utile restent inchangés dans le mode 2 par rapport au mode 1 ;
dans une étape 301_3, le convertisseur numérique/analogique 104 convertit les symboles et/ou les trames numériques ainsi obtenues en signal analogique, pour une fréquence d'échantillonnage Fq_Ech spécifique (e.g. définie par le Tableau 2) et fournit le signal ainsi généré à l'antenne radioélectrique 105 pour émission radiofréquence.

Ainsi, en transmission en mode 2 par rapport au mode 1 : les blocs S/P 100, IFFT 101 et DAC 104 ne changent pas, par contre, le module d'émission 10 est utilisé moins souvent (par exemple 4, 5 ou 6 symboles sur 7) et le bloc CP+ 102 fonctionne sur une taille différente, et donc le bloc P/S 103 aussi.

Dans le module de réception 20, en référence toujours à la figure 2, les étapes suivantes sont mises en œuvre :
dans une étape 302_1 :
   - l'antenne 201 reçoit un signal émis depuis un module d'émission 10 et fournit le signal analogique électrique résultant au convertisseur analogique/numérique 202 ;
   - le convertisseur analogique/numérique 202 numérise ce signal avec une fréquence d'échantillonnage Fq_Ech spécifique (e.g. définie par le Tableau 2) en fonction de la bande de fréquence et pour les fournir les échantillons ainsi obtenus au bloc de retrait de préfixe cyclique 203 ;
dans une étape 302_2 :
   - le bloc CP- 203 retire du symbole OFDM le préfixe cyclique dont la taille est fonction du mode opérationnel 1 ou 2 et fournit le symbole OFDM utile au convertisseur série/parallèle 204 qui créé un vecteur de taille N de valeurs correspondant à un symbole utile échantillonné;
   - le module de réception 20 extrait de chaque trame les symboles OFDM et puis les symboles OFDM utiles (e.g. un par un, séquentiellement ou en utilisant plusieurs modules 20), en nombre par trame, en fonction du mode opérationnel 1 ou 2 sélectionné,
   - le FFT 205 applique une transformation de Fourier (e.g. discrète et/ou rapide) au vecteur de valeurs/échantillons qui lui est fourni en entrée, de même taille que celle ayant produit le symbole OFDM utile fourni, de la manière prescrite par 3GPP 5G NR, dans les modes 1 et 2.
Dans une étape 302_3 : en sortie du bloc FFT 205 est ainsi délivré un flux de symboles Rx, qui, après la soustraction de symboles d'intérêt (sur les sous-porteuses d'intérêt, i.e. les sous-porteuses qui sont utilisées) et après traitement par les couches OSI supérieures (e.g. High-PHY, MAC, RLC etc..) sera ensuite utilisé dans les applications du nœud de radiocommunication dont fait partie le module de réception 20.

Ainsi en mode 2, par rapport au mode 1, en réception : le fonctionnement des blocs ADC 202, S/P 204 et FFT 205 ne changent pas. par contre, le module de réception 20 est utilisé moins souvent (par exemple 4, 5 ou 6 symboles sur 7) et le bloc CP- 203 fonctionne sur une taille différente.

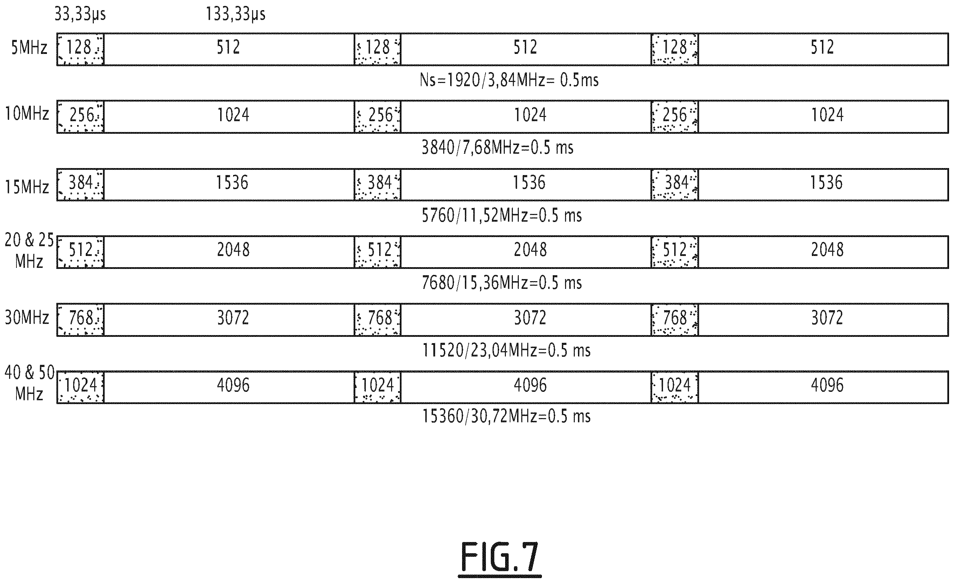

Les figures 3 à 7 illustrent différents modes de réalisation de l'invention, où la ressource correspondant à des nombres distincts de symboles OFDM (partie utile et préfixe correspondant) est réaffectée pour augmenter le préfixe des symboles OFDM transmis. Dans les modes de réalisation illustrés par les figures 3 à 6, les tailles des symboles utiles OFDM, dans les deux modes opérationnels 1 et 2, pour un espacement donné et une bande de fréquence considéré, sont égales et sont celles prescrites par la norme, en terme de durée et en terme du nombre N d'échantillons, tel qu'indiqué dans le tableau 2 plus haut. Dans les modes de réalisation illustrés par la figure 7, la durée des symboles utiles OFDM représente le double que le maximum prescrit par la norme dans le mode opérationnel 1 (car l'espacement est deux fois inferieur), mais compatible en terme du nombre N d'échantillons et/ou fréquence d'échantillonnage, tel qu'indiqué dans le tableau 2 plus haut.

Sur la figure 3 sont représentés, pour un espacement Δf égal à 15kHz, des exemples de portions de trame de 0.5 ms (correspondant pour cet espacement, à une séquence nommée « demi-slot » selon 3GPP 5G NR), pour les différentes bandes de fréquences 5, 10, 15, 20, 25, 30, 40, 50 MHz, à gauche dans le mode opérationnel 1 du 3GPP 5G NR nominal, à droite selon l'invention dans le mode opérationnel 2 (ou un de ses sous-modes) où un symbole OFDM utile par demi-slot de 0.5 ms a été supprimé, par rapport au mode opérationnel 1 : le demi-slot dans le mode opérationnel 1 comporte ainsi 7 symboles et dans le mode opérationnel 2 considéré, 6 symboles ; la ressource ainsi gagnée dans le mode opérationnel 2 étant réaffectée pour augmenter la taille/la durée du préfixe cyclique.

Sous la représentation de chaque demi-slot sont indiqués le nombre d'échantillons par demi-slot, la fréquence d'échantillonnage et la durée par demi-slot. Le nombre d'échantillons par demi-slot divisé par la fréquence d'échantillonnage indique la durée d'un demi-slot. Le nombre d'échantillons par un symbole divisé par la fréquence d'échantillonnage indique la durée d'un symbole. Le nombre d'échantillons par un préfixe cyclique divisé par la fréquence d'échantillonnage indique la durée du préfixe cyclique.

Dans chaque demi-slot, tant dans le mode opérationnel 1 que le mode opérationnel 2, chaque symbole OFDM utile comporte un nombre N d'échantillons qui est indiqué sur la représentation du demi-slot et qui est celui prescrit par la norme (exemple pour 5 MHz, N = 512) et est précédé par son préfixe cyclique, de taille CP prescrite par la norme pour le mode opérationnel 1 et indiquée en nombre d'échantillons sur la représentation du demi-slot, de taille supérieure, CP1 indiquée sur la représentation du demi-slot pour le mode opérationnel 2 (exemple pour 5 MHz, CP = CP1 = 128 échantillons).

Dans ce mode opérationnel 2, pour un espacement de 15 kHz et 6 symboles par demi-slot : le nombre total de symboles utiles OFDM par trame est 120, la durée de préfixe cyclique CP1 est de 16.67 µs et la durée de symbole OFDM utile étant 66,67 µs.

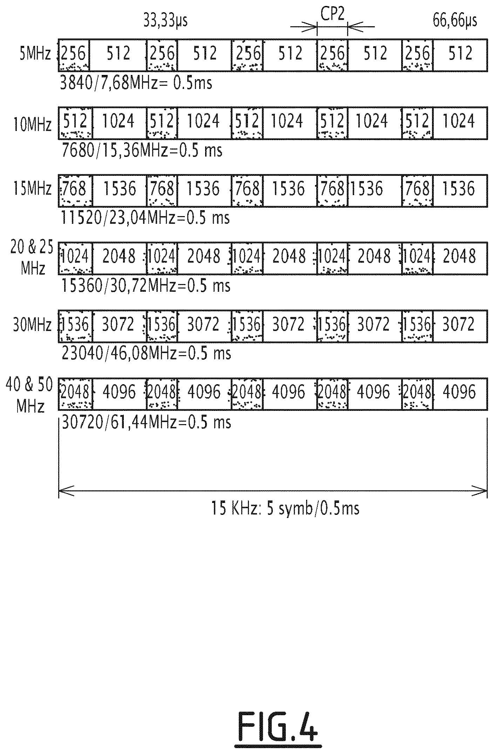

En figure 4 sont représentés les demi-slots (0.5 ms) dans le mode opérationnel 2 dans un mode de réalisation correspondant à un espacement Δf égal à 15kHz, pour les différentes bandes de fréquences 5, 10, 15, 20, 25, 30, 40, 50 MHz, où cette fois, deux symboles OFDM utiles par demi-slot de 0.5 ms ont été supprimés, par rapport au mode opérationnel 1 : le demi-slot dans le mode opérationnel 2 considéré, comprend ainsi 5 symboles ; la ressource ainsi gagnée dans le mode opérationnel 2 est réaffectée pour augmenter la taille du préfixe cyclique, la taille CP2 du préfixe cyclique (exemple pour 5 MHz, CP2 = 256 échantillons).

Dans ce mode opérationnel 2, pour un espacement de 15 kHz et 5 symboles OFDM par demi-slot : le nombre total de symboles utiles OFDM par trame est de 100, la durée de préfixe cyclique CP2 est de 33.33 µs et la durée de symbole OFDM utile étant 66,67 µs.

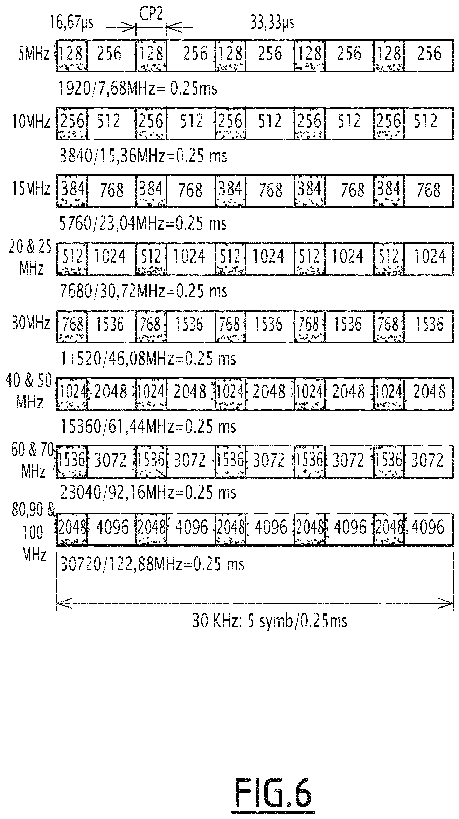

De façon similaire à ce qui a été présenté ci-dessus en référence aux figures 3 et 4 pour un espacement de 15 kHz, les figures 5 et 6 illustrent maintenant le contenu de portions de trame de 0.25 ms (correspondant pour cet espacement, à un « demi-slot » selon 3GPP 5G NR), dans les modes opérationnels 1 et 2, pour un espacement de 30 kHz.

Ainsi sur la figure 5 sont représentées, pour un espacement Δf égal à 30kHz, des exemples pour les différentes bandes de fréquences 5, 10, 15, 20, 25, 30, 40, 50, 60, 70, 80, 90, 100 MHz, à gauche dans le mode opérationnel 1 du 3GPP 5G NR nominal, à droite selon l'invention dans le mode opérationnel 2 (ou un de ses sous-modes) où un symbole OFDM utile par demi-slot de 0.25 ms a été supprimé, par rapport au mode opérationnel 1 : le demi-slot dans le mode opérationnel 1 comporte ainsi 7 symboles et dans le mode opérationnel 2 considéré, 6 symboles ; la ressource ainsi gagnée dans le mode opérationnel 2 étant réaffectée pour augmenter la taille du préfixe cyclique.

Sous la représentation de chaque demi-slot sont indiqués le nombre d'échantillons par demi-slot, la fréquence d'échantillonnage et la durée par demi-slot. Le nombre d'échantillons par demi-slot divisé par la fréquence d'échantillonnage indique la durée d'un demi-slot. Le nombre d'échantillons par un symbole divisé par la fréquence d'échantillonnage indique la durée d'un symbole. Le nombre d'échantillons par un préfixe cyclique divisé par la fréquence d'échantillonnage indique la durée du préfixe cyclique.

Dans chaque demi-slot, tant dans le mode opérationnel 1 que le mode opérationnel 2, chaque symbole OFDM utile comporte un nombre N d'échantillons qui est indiqué sur la représentation du demi-slot et qui est celui prescrit par la norme (exemple pour 5 MHz, N = 256) et est précédé par son préfixe cyclique, de taille CP prescrite par la norme pour le mode opérationnel 1 et indiquée en nombre d'échantillons sur la représentation du demi-slot, de taille supérieure, CP1 indiquée sur la représentation du demi-slot pour le mode opérationnel 2 (exemple pour 5 MHz, CP1 = 64 échantillons).

Dans ce mode opérationnel 2, pour un espacement de 30 kHz et 6 symboles par demi-slot : le nombre total de symboles utiles OFDM par trame est de 240, la durée de préfixe cyclique CP1 est de 8.33 µs et la durée de symbole OFDM utile étant 33,33 µs.

En figure 6 sont représentés les demi-slots (0.25 ms) dans le mode opérationnel 2 dans un mode de réalisation correspondant à un espacement Δf égal à 30 kHz, pour les différentes bandes de fréquences 5, 10, 15, 20, 25, 30, 40, 50, 60, 70, 80, 90, 100 MHz, où cette fois, deux symboles OFDM utiles par demi-slot de 0.25 ms ont été supprimés, par rapport au mode opérationnel 1 : le demi-slot dans le mode opérationnel 2 considéré, comprend ainsi 5 symboles ; la ressource ainsi gagnée dans le mode opérationnel 2 est réaffectée pour augmenter la taille du préfixe cyclique, la taille CP2 du préfixe cyclique (exemple pour 5 MHz, CP2 = 128 échantillons).

Dans ce mode opérationnel 2, pour un espacement sélectionné de 30 kHz, le nombre total de symboles utiles OFDM par trame est de 200, la durée de préfixe cyclique CP2 est de 16.67 µs et la durée de symbole OFDM utile étant 33,33 µs.

Dans encore d'autres modes de réalisation du mode opérationnel 2 (ou d'un de ses sous-modes), le nombre de symboles OFDM introduits par demi-slot est l'un des suivants :
- pour un espacement de 30 kHz : 4 symboles OFDM/0.25ms ou 160 symboles OFDM/trame de 10 ms ; pour chaque symbole, la durée du préfixe cyclique est CP3=224/(7.68 MHz)=29,16(6) µs (29,17 µs par approximation) et la durée du symbole utile Tu=256/(7.68 MHz)=33,33(3) µs (33,33 µs par approximation) ;
- pour un espacement de 15 kHz : 4 symboles OFDM/0.5ms ou 80 symboles OFDM/trame de 10 ms ; pour chaque symbole, la durée du préfixe cyclique CP3=448/(7.68 MHz)=58,33(3) µs (58,33 µs par approximation) et la durée du symbole utile Tu=512/(7.68 MHz)=66,66(6) µs (66,67 µs par approximation) ;
- pour un espacement de 60 kHz : 5 symboles OFDM/0.125ms ou 400 symboles OFDM/trame de 10 ms ; pour chaque symbole, la durée du préfixe cyclique CP2=64/(7.68 MHz)=8,33(3) µs (8,33 µs par approximation) et la durée du symbole utile Tu=128/(7.68 MHz)=16,66(6) µs (16,67 µs par approximation) ; on notera qu'une alternative est d'utiliser la configuration 60 kHz aussi pour la gamme FR2 (et donc pas seulement au FR1) ;
- pour un espacement de 60 kHz : 4 symboles OFDM/0.125ms ou 320 symboles OFDM/trame de 10 ms ; pour chaque symbole, la durée du préfixe cyclique CP3=112/(7.68 MHz)=14,583(3) µs (14,583 µs par approximation) et Tu=128/(7.68 MHz)=16,66(6) µs (16,667 µs par approximation).

Dans un mode de réalisation, le module d'émission radio 10, similairement, le module de réception radio 20 sont adaptés pour, sur réception d'une commande correspondante, passer d'un sous-mode opérationnel 2 avec un nombre de symboles donné par demi-slot (par exemple 5 symboles OFDM) pour un espacement donné à un autre sous-mode opérationnel 2 avec un autre nombre de symboles donné par demi-slot (par exemple 4 symboles OFDM) pour un espacement donné, voire pour un espacement différent. Cette adaptabilité permet ainsi de pouvoir fournir des transmissions de qualité en s'adaptant aux besoins, et de pouvoir basculer par exemple entre un contexte de type broadcast/diversité coopérative et un contexte de simple transmission d'information utile en haut débit (e.g. pour un service nécessitant d'haut débit) dans un rayon proche de communication. Le module d'émission radio 10, similairement, le module de réception radio 20 sont adaptés pour, sur réception d'une commande correspondante, ainsi reconfigurer le slot, ou la sous-trame, ou la trame radio avec des CP différents, d'une trame (ou d'un slot ou une sous-trame) à une autre.

Dans un autre mode de réalisation de l'invention, la constitution elle-même du symbole OFDM utile est modifiée par rapport à la norme 3GPP 5G NR dans le mode opérationnel 2 (ou un de ses sous-modes) : comme représenté en figure 7 dans le mode opérationnel 2 pour des bandes de 5, 10, 15, 20, 25, 30, 40, 50 MHz, la durée du symbole OFDM utile est doublée, en gardant toutefois le même nombre d'échantillons dans le symbole (ce nombre lui non doublé), par rapport au mode opérationnel 1 pour un espacement de 15 kHz. Il s'agit d'une configuration qui est en dehors de la norme (parce qu'on change la valeur de CP mais aussi de Tu, de fréquence d'échantillonnage et d'espacement entre sous-porteuses) mais tout en gardant une allocation sur 0,5 ms (ou multiple) et une taille IFFT/FFT conforme avec la norme. On peut dériver également la figure 7 de la figure 3 (e.g. figure 3 droite, mode opérationnel 2, avec 6 symboles par demi-slot de 0,5 ms pour un espacement de 15 kHz) si on divise par deux le nombre de symboles dans un demi-slot (i.e. on utilise 3 au lieu de 6) mais on double la durée/périodicité entre 2 échantillons (i.e. on divise la fréquence d'échantillonnage par 2) pour garder une allocation sur 0,5 ms, et donc on fait doubler la taille du symbole OFDM (préfixe cyclique mais aussi Tu). Le fait de doubler le Tu (i.e. nouveau Tu=66,6(6) µs × 2=133,3(3) µs ou 133,33 µs par approximation) fait que l'écart inter-sous-porteuse SCS (ou l'espacement entre sous-porteuses) sera de seulement 7,5 kHz (ou 1/(66,6(6) µs × 2)=1/(133,3(3) µs)). Cette configuration permet d'avoir des CPs de l'ordre de 33,33 µs comparables avec ceux de la configuration pour 15 kHz où on utilise 2 symboles pour la création d'un nouveau CP (cf. figure 4). En revanche, on a moins de symboles utiles (seulement 3 par trame de 0,5 ms). Néanmoins, dans une bande de 180 kHz (la taille d'un Ressource Block (RB) standard, de 12 sous-porteuses de 15 kHz pour une numérologie 0) on peut utiliser 2 fois plus de sous-porteuses (ou 2 RBs modifiés de 90 kHz chacun si on garde la définition de 12 sous-porteuses par RB), ce qui fait que cette configuration de 7,5 kHz est plus efficace du point de vue de l'allocation de ressources, car en principe (pour la même bande) on peut utiliser 6 symboles OFDM sur 2 × 7,5 kHz (sur 0.5 ms) avec un CP de 33,33 µs au lieu de 5 symboles OFDM seulement sur une configuration de 15 kHz (sur 0.5 ms) avec un CP d'une durée similaire de 33,33 µs. En même temps, une configuration avec un espacement de 7.5 kHz, un Tu de 133,33 µs et un CP de 33,33 µs est plus robuste aux multi-trajets qu'un mode opérationnel 2 avec 15 kHz, un Tu de 66,67 µs et un CP1 de 16,67 µs (figure 3 droite) car CP1 beaucoup plus petit. Néanmoins, une configuration avec un espacement de 7.5 kHz est plus adaptée à des situations de communication avec une mobilité plus faible, car il s'agit d'une configuration avec moins de résistance au Doppler par rapport à une configuration SCS supérieure (15, 30, 60 kHz etc.).

La méthode précédente correspond au tableau suivant :

**Tableau 3 : taille FFT/IFFT, fréquence d'échantillonnage**

| | **5 MHz** | **10 MHz** | **15 MHz** | **20 MHz** | **25 MHz** | **30 MHz** | **40 MHz** | **50 MHz** | **60 MHz** | **70 MHz** | **80 MHz** | **90 MHz** | **100 MHz** |
|---|---|---|---|---|---|---|---|---|---|---|---|---|---|
| **7.5 kHz** | | | | | | | | | | | | | |
| N (FFT) | 512 | 1024 | 1536 | 2048 | 2048 | 3072 | 4096 | 4096 | N/A | N/A | N/A | N/A | N/A |
| Fq_{_}Ech | 3,84 MSps | 7,68 MSps | 11,52 MSps | 15,36 MSps | 15,36 MSps | 23,04 MSps | 30,72 MSps | 30,72 MSps | (>4096 FFT) | (>4096 FFT) | (>4096 FFT) | (>4096 FFT) | (>4096 FFT) |

Par contre, si on implémente avec la méthode précédente (figure 7), il n'y a plus de bande de garde et on ne peut plus utiliser entièrement la configuration en termes de bande (par exemple sur une bande de 5 MHz on peut utiliser maximum 512 × 7.5 kHz=3.84 MHz). Alors, on va procéder d'une autre manière décrite dans le tableau 4 ci-dessous, pour garder une fréquence d'échantillonnage constante avec la norme en rapport avec les autres configurations, qui donne une autre configuration en 7.5 kHz, qui est beaucoup plus flexible (mais n'utilise pas toutes les sous-porteuses):

**Tableau 4 : taille FFT/IFFT, fréquence d'échantillonnage**

| | **5 MHz** | **10 MHz** | **15 MHz** | **20 MHz** | **25 MHz** | **30 MHz** | **40 MHz** | **50 MHz** | **60 MHz** | **70 MHz** | **80 MHz** | **90 MHz** | **100 MHz** |
|---|---|---|---|---|---|---|---|---|---|---|---|---|---|
| **7.5 kHz** | | | | | | | | | | | | | |
| N (FFT) | 1024 | 2048 | 3072 | 4096 | 4096 | N/A | N/A | N/A | N/A | N/A | N/A | N/A | N/A |
| Fq_{_}Ech | 7,68 MSps | 15,36 MSps | 23,04 MSps | 30,72 MSps | 30,72 MSps | (>4096 FFT) | (>4096 FFT) | (>4096 FFT) | (>4096 FFT) | (>4096 FFT) | (>4096 FFT) | (>4096 FFT) | (>4096 FFT) |

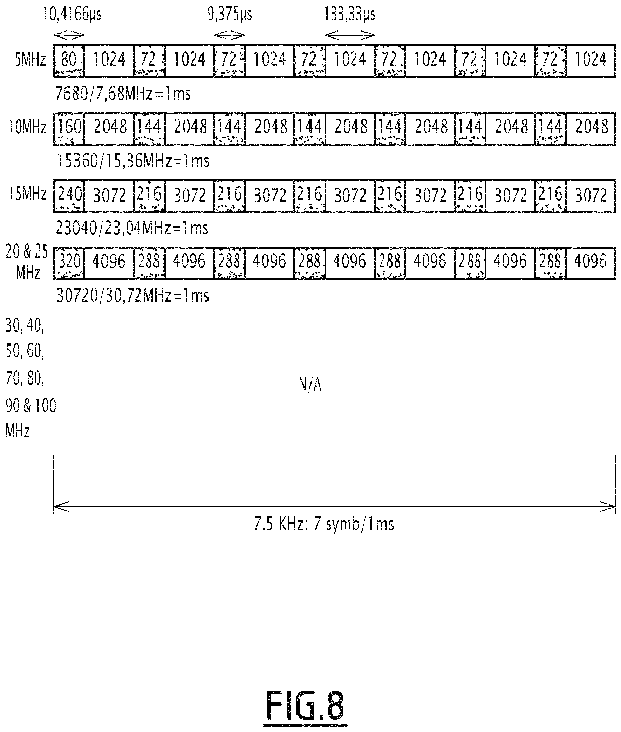

La figure 8 illustre une telle configuration en 7,5 kHz avec 7 symboles par demi-slot de 1ms (avec, dans un demi-slot, durée du premier CP de 10,41(6) µs (10,417 µs par approximation), durée des CP suivants de 9,375 µs et durée de chaque symbole OFDM utile de 133,3(3) µs ou 133,333 µs par approximation).

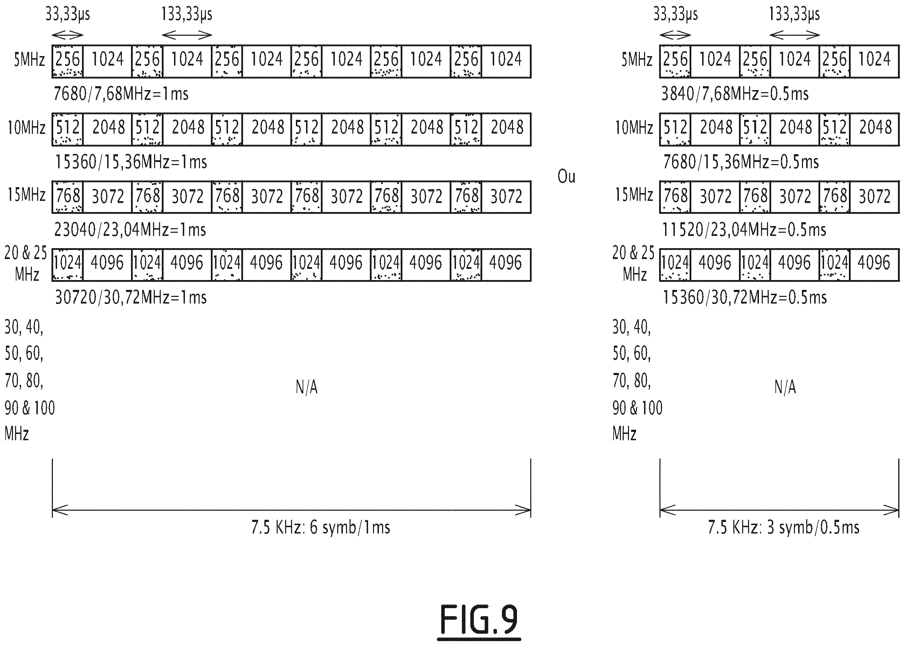

La figure 9 illustre une telle configuration en 7.5kHz, avec cette fois 6 symboles par demi-slot de 1ms (section de figure à gauche), équivalent à 2×3 symboles 7.5kHz/(2×0.5ms) (section de figure à droite, avec une allocation de ressources plus fine) (avec, dans un demi-slot, durée de chaque CP de 33,3(3) µs ou 33,33 µs par approximation et durée de chaque symbole OFDM utile de 133,3(3) µs ou 133,33 µs par approximation).

De la même manière, la figure 9 illustre deux options selon l'invention pour la structure d'un demi-slot de 1 ms pour la configuration 7,5 kHz avec 6 symboles par demi-slot ou un demi-slot de 0,5 ms pour la configuration 7,5 kHz avec 3 symboles par demi-slot.

La taille d'un symbole OFDM utile (133,33 µs) ou d'un préfixe cyclique (33,33 µs) ne change pas par rapport à la figure 7. Ce qui change est la fréquence d'échantillonnage & le nombre d'échantillons par symbole qui sont doublés (éventuellement aussi le type d'allocation par 6 ou par 3 symboles).

Néanmoins, dans une bande de 180 kHz (la taille d'un Ressource Block (RB) standard, de 12 sous-porteuses de 15 kHz pour une numérologie 0), il peut être utilisé 2 fois plus de sous-porteuses (ou 2 RBs modifiés de 90 kHz chacun si on garde la définition de 12 sous-porteuses par RB), ce qui fait que cette configuration de 7,5 kHz est plus efficace du point de vue de l'allocation de ressources, car on peut utiliser 6 symboles OFDM sur 2 × 7,5 kHz (sur 0.5 ms) avec un CP de 33,33 µs au lieu de 5 symboles OFDM seulement sur une configuration de 15 kHz (sur 0.5 ms) avec un CP d'une durée similaire de 33,33 µs. En même temps, il est garanti de pouvoir utiliser une largeur de bande similaire avec celle pour la configuration avec un espacement de 15 kHz, car la taille de la FFT/IFFT a été doublée pour l'espacement de 7.5 kHz en rapport avec la configuration pour l'espacement de 15 kHz (i.e. pour garder la même largeur de bande totale même si l'espacement est 2 fois plus petit pour une configuration de 7.5 kHz, car (N×2) × 7.5 kHz = N × 15 kHz).

De la même manière, à partir d'une configuration avec un espacement de 30 kHz avec 6 symboles/0.25ms (CP1=8,3(3) µs et Tu=33,3(3) µs, cf. figure 5 droite), si on double la distance entre 2 échantillons et on réduit par deux le nombre de symboles (3 à la place de 6) pour garder la même allocation sur un demi-slot de 0.25 ms, on obtient une configuration avec 3 symboles/0.25ms (ou 2×3 symboles/0.5ms) avec un CP de 16,67 µs et un Tu de 66,67 µs pour un espacement de 15 kHz, mais avec un nombre d'échantillons et une fréquence d'échantillonnage divisés par 2. L'avantage est que des tailles IFFT/FFT plus faibles peuvent être utilisées, mais le désavantage est que la bande ne peut être utilisée entièrement comme cela avait été fait pour les configurations précédentes.

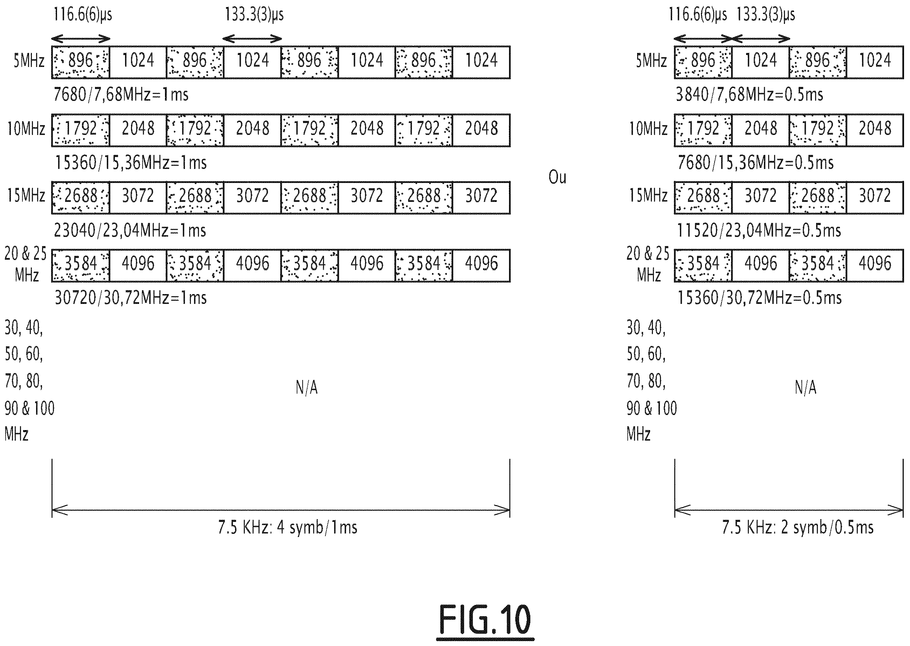

De la même manière, la figure 10 illustre deux options selon l'invention pour la structure d'un demi-slot de 1 ms pour la configuration 7,5 kHz avec 4 symboles par demi-slot ou un demi-slot de 0,5 ms pour la configuration 7,5 kHz avec 2 symboles par demi-slot, pour une durée du préfixe cyclique de 896/(7.68 MHz)=116,6(6) µs (116,67 µs par approximation) et la durée de symbole OFDM utile étant 133,3(3) µs (133,33 µs par approximation).

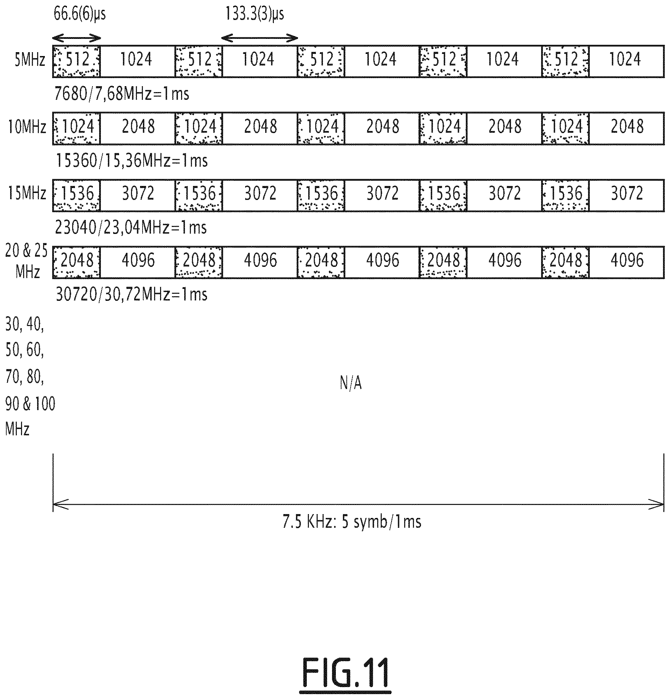

De la même manière, la figure 11 illustre la structure d'un demi-slot de 1 ms selon l'invention pour la configuration 7,5 kHz avec 5 symboles par demi-slot.

La présente invention propose donc un nombre d'échantillons « flexible » en fonction de changement de bande et de numérologie (et qui reste compatible avec les configurations bande/numérologie précédentes). Plus précisément, le nombre d'échantillons d'un symbole est choisi pour qu'il reste compatible avec les tailles IFFT/FFT, et le nombre d'échantillons d'un préfixe cyclique est choisi pour qu'il reste un nombre entier, indépendamment de la bande/numérologie.

La présente invention offre une meilleure résistance aux multi-trajets et répond aux problèmes de synchronisation multipoint à point, par exemple supérieurs à 5 µs pour une configuration de 15 kHz ou à 2.5 µs pour une configuration de 30 kHz.

En effet, les erreurs de synchronisation peuvent s'additionner aux multi trajets, et donc il faut prendre en compte un CP qui considère :
- l'écart max entre les multi-trajets (pour les canaux complexes on peut avoir entre 5-10 µs)
- le temps de propagation (10 µs ça peut être suffisant pour des distances < 3 Km) si on n'utilise pas ou on ne peut pas utiliser des mécanismes de type TA (ou « Timing Advance ») - valable entre autres pour le cas D2D/V2V/V2X
- les erreurs de synchronisation/les asynchronismes (e.g. 10 µs) entre les (multiples) transmetteurs potentiels pour le broadcast/multicast, pour le relayage ou pour la diversité coopérative.

Si on somme les effets, il peut s'avérer nécessaire d'avoir des CPs qui dépassent facilement 20-30 µs, ce qu'il n'est pas du tout prévu par la norme 3GPP 5G NR.

La solution correspondant au mode opérationnel 2 utilise les tailles IFFT, FFT, et fréquence d'échantillonnage et/ou nombre d'échantillons prévus par la norme 3GPP 5G NR (Rel-15).

Dans un mode de réalisation, des symboles de taille différente (mais en respectant la durée totale d'une trame de 10 ms) sont insérés, par exemple en fonction de commandes reçues, en considérant deux (ou plusieurs) éléments successifs émis et/ou reçus parmi deux (ou plusieurs) slots, deux (ou plusieurs) sous-trames ou deux (ou plusieurs) trames :
- le nombre total de symboles utiles par élément - et la taille des préfixes CP - est modifié entre les deux (ou plusieurs) éléments ;
- ladite modification étant réalisée avec maintien de l'espacement Δf (si mélange de symboles sur 7,5 kHz, le nombre total de symboles peut varier entre 4 et 7 symboles par demi-slot (ou e.g. entre 40 et 70 symboles par trame si modification au niveau d'une trame) ; si mélange de symboles sur 15 kHz, le nombre total de symboles peut varier entre 4 et 6 symboles par demi-slot (ou e.g. entre 80 et 120 symboles par trame si modification au niveau d'une trame) ; si mélange de symboles sur 30 kHz, le nombre total de symboles peut varier entre 4 et 6 symboles par demi-slot (ou e.g. entre 160 et 240 symboles par trame si modification au niveau d'une trame) ; si mélange de symboles sur 60 kHz, le nombre total de symboles peut varier entre 4 et 5 symboles par demi-slot (ou e.g. entre 320 et 400 symboles par trame si modification au niveau d'une trame)). La modification est utile lorsque des utilisateurs se trouvent dans des situations différentes - plus proches ou plus loin du transmetteur ; sans relayage ou avec relayage, etc. et donc un scheduling diffèrent - et sans diminuer le débit pour tous les utilisateurs en même temps ; un CP grand augmente la robustesse mais diminue le débit (e.g. on a 4, 5, ou 6 symboles à la place de 7, pour le même temps de transmission) ; et/ou
- l'espacement Δf est modifié entre les deux (ou plusieurs) éléments : e.g. par exemple (au moins) un demi-slot ou (au moins) un slot en numérologie 15 kHz et (au moins) un autre demi-slot ou (au moins) un slot en numérologie 30 kHz et/ou (au moins) un autre demi-slot ou (au moins) un slot en numérologie 60 kHz et/ou (au moins) un autre demi-slot ou (au moins) un slot en numérologie 7,5 kHz; ou e.g. (au moins) une trame en numérologie 15 kHz et (au moins) une autre trame numérologie 30 kHz et/ou (au moins) une autre trame numérologie 60 kHz et/ou (au moins) une autre trame numérologie 7,5 kHz ; ou 6 symboles/0.5 ms en numérologie 15 kHz CP1 et 12 symboles/0.5 ms en numérologie 30 kHz CP1 (en 30 kHz les symboles sont 2 fois plus courts) et/ou 24 symboles/0.5 ms en numérologie 60 kHz CP1 (en 60 kHz les symboles sont 4 fois plus courts par rapport à 15 kHz, et donc un communication plus rapide) et/ou 3 symboles/0.5 ms en numérologie 7,5 kHz; ou 5 symboles/0.5 ms en numérologie 15 kHz CP2 et 10 symboles/0.5 ms numérologie 30 kHz CP2 (en 30 kHz les symboles sont 2 fois plus courts par rapport à 15 kHz, et donc un communication plus rapide) et/ou 20 symboles/0.5 ms numérologie 60 kHz CP2 (en 60 kHz les symboles sont 4 fois plus courts par rapport à 15 kHz, et donc un communication plus rapide) ; ou 6 symboles/0.5 ms en numérologie 15 kHz CP1 (16.67 µs) et 10 symboles/0.5 ms en numérologie 30 kHz CP2 (16.67 µs) et 3 symboles/0.5 ms en numérologie 7,5 kHz CP 33,33 µs; ou encore 12 symboles/1 ms en numérologie 15 kHz CP1 (16.67 µs) et 20 symboles/1 ms en numérologie 30 kHz CP2 (16.67 µs) et 6 symboles/1 ms en numérologie 7,5 kHz CP 33,33 µs; ou encore 12 symboles/1 ms en numérologie 15 kHz CP1 (16.67 µs) et 20 symboles/1 ms en numérologie 30 kHz CP2 (16.67 µs) et 7 symboles/1 ms en numérologie 7,5 kHz CP 10,41(6) µs et CP 9,375 µs; ou 6 symboles/0.5 ms en numérologie 15 kHz CP1 (16.67 µs) et 10 symboles/0.5 ms en numérologie 30 kHz CP2 (16.67 µs); ou encore 12 symboles/1 ms en numérologie 15 kHz CP1 (16.67 µs) et 20 symboles/1 ms en numérologie 30 kHz CP2 (16.67 µs) : le symbole utile change de taille, mais celle du CP ne change pas ; l'avantage est qu'on peut allouer (pour le même type de canal) des symboles plus rapides (taille utile plus faible).

**Tableau 5 : nombre de symboles OFDM par trame**

| Numérologie | Configuration nombre de symboles/demi-slot | | | |
|---|---|---|---|---|
| | 4 symboles/ demi-slot | 5 symboles/ demi-slot | 6 symboles/ demi-slot | 7 symboles/ demi-slot |
| 7,5 kHz, 1 demi-slot=1ms | 40 symboles/ Trame de 10 ms | 50 symboles/ Trame de 10 ms | 60 symboles/ Trame de 10 ms | 70 symboles/ Trame de 10 ms |
| 15 kHz, 1 demi-slot=0.5ms | 80 symboles/ Trame de 10 ms | 100 symboles/ Trame de 10 ms | 120 symboles/ Trame de 10 ms | 140 symboles/ Trame de 10 ms |
| 30 kHz, 1 demi-slot=0.25ms | 160 symboles/ Trame de 10 ms | 200 symboles/ Trame de 10 ms | 240 symboles/ Trame de 10 ms | 280 symboles/ Trame de 10 ms |
| 60 kHz, 1 demi-slot=0.125ms | 320 symboles/ Trame de 10 ms | 400 symboles/ Trame de 10 ms | 480 symboles/ Trame de 10 ms | 560 symboles/ Trame de 10 ms |

Le tableau 5 synthétise le nombre de symboles par demi-slot pour différentes numérologies en mode 2 et en mode 1.

Il a été décrit ci-dessus des préfixes cycliques. Dans un mode de réalisation, à la place (ou en plus) des préfixes cycliques sont utilisés des suffixes cycliques (CS ou "Cyclic Suffix"), qui ont la même structure (i.e. le même nombre d'échantillons) que les préfixes cycliques (CP) définis ci-dessus, mais qui sont ajoutés à la fin du symbole utile, en copiant une partie du début du symbole utile.

De la même manière on peut utiliser par exemple un ZP (Préfixe Zéro ou « Zero Prefix ») de la même taille que le CP, mais en ajoutant des échantillons de valeur zéro (ou proches de zéro). Pour rappel, la technique avec un préfixe cyclique consiste à recopier les derniers échantillons du bloc/symbole utile au début de celui-ci et le bourrage de zéros qui consiste à insérer des zéros au début du bloc/symbole utile. Ces deux techniques conduisent naturellement à une diminution de l'efficacité spectrale.

De la même manière on notera qu'une augmentation du préfixe cyclique, et/ou du préfixe zéro et/ou le suffixe cyclique conduit également à une diminution d'efficacité spectrale.

L'invention peut bien sûr être mise en oeuvre avec des techniques d'accès multiple comme OFDMA & SC-FDMA (« orthogonal frequency-division multiple access », technique d'accès multiple qui utilise OFDM « orthogonal frequency-division multiplexing » ; « single-carrier frequency division multiple access » qui utilise SC-FDM « Single carrier frequency-division multiplexing »).

L'invention peut bien sûr être mise en oeuvre dans des modes TDD ou FDD.

Dans un autre mode de réalisation, un ou plusieurs des blocs IFFT 101, CP+ 102, CP- 203, FFT 205 sont réalisés sous forme d'un composant logique programmable, tel qu'un (ou plusieurs) DSP (de l'anglais *Digital Signal Processor*), FPGA (de l'anglais *Field Programmable Gate Array*), ou encore sous forme d'un circuit intégré dédié, tel qu'un ASIC (de l'anglais *Applications Specific Integrated Circuit*).

## Revendications

1. Procédé d'émission de trames radio (301), dans un module électronique d'émission radio (10) adapté, comprenant les étapes suivantes :
- pour un espacement Δf quelconque entre sous-porteuses fréquentielles préalablement sélectionné entre plusieurs espacements, un nombre déterminé d'échantillons N par symbole OFDM utile et une bande fréquentielle d'émission BW déterminée où lesdits espacement Δf, nombre d'échantillons N par symbole et bande fréquentielle d'émission BW sont tels que prescrits par la norme 3GPP 5G NR et définissant une configuration d'émission courante, génération de symboles OFDM utiles ;
- constitution d'une trame radio de durée 10 ms comprenant certains des symboles OFDM utiles générés et dans laquelle chaque symbole OFDM utile est précédé d'un préfixe cyclique, respectivement suivi d'un suffixe cyclique, répétant une partie dudit symbole utile ;
ledit procédé d'émission étant **caractérisé en ce que** le nombre total de symboles OFDM utiles dans la trame radio est strictement inférieur au nombre prescrit par la norme 3GPP 5G NR pour ladite configuration et **en ce que** la ressource ainsi libérée dans la trame radio est utilisée en augmentant la taille des préfixes, respectivement suffixes, cycliques desdits symboles par rapport à la taille des préfixes prescrites pour ladite configuration par ladite norme.

2. Procédé d'émission de trames radio (301) selon la revendication 1, selon lequel la trame est constituée conformément à un ou plusieurs des formats suivants :
- pour un espacement sélectionné de 30 kHz, la durée de préfixe, respectivement suffixe, cyclique est de 8,33 µs et la durée de symbole OFDM utile étant 33,33 µs ;
- pour un espacement sélectionné de 30 kHz, la durée de préfixe cyclique, respectivement suffixe, est de 16,67 µs et la durée de symbole OFDM utile étant 33,33 µs ;
- pour un espacement sélectionné de 30 kHz, respectivement suffixe, cyclique est de 29,17 µs et la durée de symbole OFDM utile étant 33,33 µs ;
- pour un espacement sélectionné de 15 kHz, la durée de préfixe, respectivement suffixe, cyclique est de 16,67 µs et la durée de symbole OFDM utile étant 66,67 µs ;
- pour un espacement sélectionné de 15 kHz, la durée de préfixe, respectivement suffixe, cyclique est de 33,33 µs et la durée de symbole OFDM utile étant 66,67 µs ;
- pour un espacement sélectionné de 15 kHz, la durée de préfixe, respectivement suffixe, cyclique est de 58,33 µs et la durée de symbole OFDM utile étant 66,67 µs ;
- pour un espacement sélectionné de 7,5 kHz, la durée de préfixe, respectivement suffixe, cyclique est de 10,417 µs et de 9,375 µs et la durée de symbole OFDM utile étant 133,333 µs ;
- pour un espacement sélectionné de 7,5 kHz, la durée de préfixe, respectivement suffixe, cyclique est de 33,33 µs et la durée de symbole OFDM utile étant 133,33 µs ;
- pour un espacement sélectionné de 7,5 kHz, la durée de préfixe, respectivement suffixe, cyclique est de 66,67 µs et la durée de symbole OFDM utile étant 133,33 µs ;
- pour un espacement sélectionné de 7,5 kHz, la durée de préfixe, respectivement suffixe, cyclique est de 116,67 µs et la durée de symbole OFDM utile étant 133,33 µs ;
- pour un espacement sélectionné de 60 kHz, la durée de préfixe, respectivement suffixe, cyclique est de 8,33 µs et la durée de symbole OFDM utile étant 16,67 µs ;
- pour un espacement sélectionné de 60 kHz, la durée de préfixe, respectivement suffixe, cyclique est de 14,583 µs et la durée de symbole OFDM utile étant 16,667 µs.

3. Procédé d'émission de trames radio (301) selon la revendication 1 ou 2, selon lequel, étant donné deux ou plusieurs éléments successifs émis parmi deux ou plusieurs slots, deux ou plusieurs sous-trames ou deux ou plusieurs trames :
- le nombre total de symboles OFDM utiles par élément - et la taille des préfixes CP - est modifié entre les deux ou plusieurs éléments ;
- ladite modification étant réalisée avec maintien de l'espacement Δf ; et/ou l'espacement Δf est modifié entre les deux ou plusieurs éléments.

4. Procédé de réception de trames radio (302), dans un module électronique de réception radio (20) adapté, comprenant les étapes suivantes :
- réception de trames radio de 10 ms comprenant des symboles OFDM utiles précédemment générés conformément à la norme 5G NR et dans laquelle chaque symbole OFDM utile est précédé d'un préfixe, respectivement suffixe, cyclique répétant une partie dudit symbole OFDM utile ;
- pour chaque symbole OFDM utile, détermination d'un symbole OFDM utile corrigé en fonction dudit symbole OFDM utile et de son préfixe, respectivement suffixe ;
- pour un espacement quelconque entre sous-porteuses fréquentielles préalablement sélectionné entre plusieurs espacements, une fréquence déterminée d'échantillonnage et une bande fréquentielle d'émission déterminée tels que prescrits par la norme 3GPP 5G NR et définissant une configuration de réception courante, transformation de Fourier inverse desdits symboles OFDM corrigés conformément à la norme 3GPP 5G NR,
ledit procédé de réception étant **caractérisé en ce que** le nombre total de symboles OFDM utiles dans la trame radio est strictement inférieur au nombre prescrit par la norme 3GPP 5G NR et **en ce que** la taille des préfixes, respectivement suffixes, cycliques desdits symboles est supérieure à celle prescrite par la norme 3GPP 5G NR pour ladite configuration.

5. Procédé de réception de trames radio (302) selon la revendication 4, selon lequel la trame reçue est constituée conformément à l'un ou plusieurs des formats suivants :
- pour un espacement sélectionné de 30 kHz, la durée de préfixe, respectivement suffixe, cyclique est de 8,33 µs et la durée de symbole OFDM utile étant 33,33 µs ;
- pour un espacement sélectionné de 30 kHz, la durée de préfixe cyclique, respectivement suffixe, est de 16,67 µs et la durée de symbole OFDM utile étant 33,33 µs ;
- pour un espacement sélectionné de 30 kHz, respectivement suffixe, cyclique est de 29,17 µs et la durée de symbole OFDM utile étant 33,33 µs ;
- pour un espacement sélectionné de 15 kHz, la durée de préfixe, respectivement suffixe, cyclique est de 16,67 µs et la durée de symbole OFDM utile étant 66,67 µs ;
- pour un espacement sélectionné de 15 kHz, la durée de préfixe, respectivement suffixe, cyclique est de 33,33 µs et la durée de symbole OFDM utile étant 66,67 µs ;
- pour un espacement sélectionné de 15 kHz, la durée de préfixe, respectivement suffixe, cyclique est de 58,33 µs et la durée de symbole OFDM utile étant 66,67 µs ;
- pour un espacement sélectionné de 7,5 kHz, la durée de préfixe, respectivement suffixe, cyclique est de 10,417 µs et de 9,375 µs et la durée de symbole OFDM utile étant 133,333 µs ;
- pour un espacement sélectionné de 7,5 kHz, la durée de préfixe, respectivement suffixe, cyclique est de 33,33 µs et la durée de symbole OFDM utile étant 133,33 µs ;
- pour un espacement sélectionné de 7,5 kHz, la durée de préfixe, respectivement suffixe, cyclique est de 66,67 µs et la durée de symbole OFDM utile étant 133,33 µs ;
- pour un espacement sélectionné de 7,5 kHz, la durée de préfixe, respectivement suffixe, cyclique est de 116,67 µs et la durée de symbole OFDM utile étant 133,33 µs ;
- pour un espacement sélectionné de 60 kHz, la durée de préfixe, respectivement suffixe, cyclique est de 8,33 µs et la durée de symbole OFDM utile étant 16,67 µs ;
- pour un espacement sélectionné de 60 kHz, la durée de préfixe, respectivement suffixe, cyclique est de 14,583 µs et la durée de symbole OFDM utile étant 16,667 µs.

6. Module électronique d'émission radio (10) adapté pour mettre en œuvre un procédé d'émission de trames radio conforme à l'une quelconque des revendications 1 à 3, et, de préférence, également adapté pour mettre en œuvre la norme 3GPP 5G NR.

7. Module électronique de réception radio (20) adapté pour mettre en œ uvre un procédé de réception de trames radio conforme à l'une quelconque des revendications 4 à 5, et, de préférence, également adapté pour mettre en œuvre la norme 3GPP 5G NR.

8. Trame radio résultant de la mise en œuvre d'un procédé d'émission de trames radio conforme à l'une quelconque des revendications 1 à 3.
